# EUROPÄISCHE PATENTSCHRIFT

(11) **EP 3 911 974 B1**
(45) Veröffentlichungstag und Bekanntmachung des Hinweises auf die Patenterteilung: **04.03.2026**
(21) Anmeldenummer: 20700376.5
(22) Anmeldetag: 10.01.2020
(51) Int. Cl.: G01S 17/93

(54) **FAHRZEUGSCHEIBE MIT INTEGRIERTEM SENSORMODUL**
VEHICLE WINDOW WITH INTEGRATED SENSOR MODULE
VITRE DE VÉHICULE À MODULE DE CAPTEUR INTÉGRÉ

(30) Priorität: 15.01.2019 EP 19151818
(43) Veröffentlichungstag der Anmeldung: 24.11.2021
(73) Patentinhaber: FREEGLASS GmbH & Co. KG, 71409 Schwaikheim (DE)
(72) Erfinder: SCHMIDT, Sebastian, 70176 Stuttgart (DE); FRIOCOURT, Laurent, 70190 Stuttgart (DE); WEISSENBERGER, Uwe, 97078 Würzburg (DE); BLANCHE, Luc-Henry, 58093 Hagen (DE)
(74) Vertreter: Witte, Weller & Partner Patentanwälte mbB
(86) Internationale Anmeldenummer: PCT/EP2020/050534
(87) Internationale Veröffentlichungsnummer: WO 2020/148185

(56) Entgegenhaltungen:
- EP-A1- 2 325 002
- US-A1- 2011 285 576
- US-A1- 2017 274 832
- US-A1- 2018 037 267
- US-B1- 7 553 536

## Beschreibung

Die Erfindung liegt auf dem technischen Gebiet der Scheibenfertigung und betrifft eine Fahrzeugscheibe mit einem integrierten Sensormodul und deren Herstellungsverfahren.

Moderne Fahrzeuge sind in aller Regel mit Sensoren für die Verkehrsüberwachung ausgestattet, welche beispielsweise Straßenschilder erkennen oder die Position und Geschwindigkeit von Objekten außerhalb des Fahrzeugs, wie andere Verkehrsteilnehmer oder auf der Fahrbahn befindliche Hindernisse, bestimmen. Derzeit werden zu diesem Zweck vorwiegend optische Kameras oder Radarsysteme eingesetzt. Die Verwendung von Kameras hat den Nachteil, dass die Objekterkennung stark von äußeren Umwelteinflüssen abhängt, insbesondere den jeweils vorliegenden Licht- und Witterungsverhältnissen. Die Verwendung von Radarsystemen zur Verkehrsüberwachung ist nahezu unabhängig von Licht- und Witterungsverhältnissen, jedoch ist die Präzision der Radarsysteme derzeit nicht ausreichend für eine ordnungsgemäße Objekterkennung. In dieser Hinsicht vorteilhaft haben sich LiDaR (Light Detection and Ranging)-Systeme erwiesen, bei denen mittels Laserpulse mit einer Wellenlänge im Infrarotbereich die Umgebung punktweise abgetastet und ein Abbild der Umgebung erstellt wird. Der Abstand eines Objekts wird über eine Laufzeitmessung der vom LiDaR-Sensor emittierten und vom Objekt reflektierten Laserpulse bestimmt. Aufgrund der hohen Präzision bei der Objekterkennung und der geringen Abhängigkeit von Licht- und Witterungsverhältnissen sind LiDaR-Systeme gut geeignet, bisherige Sensorsysteme zu ergänzen.

Typischer Weise werden Sensoren für die Verkehrsüberwachung im Innenbereich des Fahrzeugs, meist hinter der Windschutzscheibe, angeordnet. Alternativ ist denkbar, die Sensoren in einem separaten Sensorgehäuse unterzubringen, welches dann von außen am Fahrzeug montiert wird. Jedoch bringen sowohl die Innenmontage hinter der Windschutzscheibe als auch die Außenanbringung in einem separaten Sensorgehäuse nicht unwesentliche Nachteile mit sich. So müssen insbesondere bei LiDaR-Sensoren aufgrund der Neigung der Windschutzscheibe zur Fahrbahn die Laserpulse die Windschutzscheibe in einem sehr flachen Winkel durchqueren, was eine relativ hohe Ablenkung, Streuung und Absorption der emittierten und reflektierten Photonen zur Folge hat. Da ein nicht geringer Anteil der Photonen für die Messung verloren geht, wird die Leistungsfähigkeit und Effizienz des LiDaR-Systems negativ beeinträchtigt. Dies kann zwar durch einen außenmontierten Sensor vermieden werden, jedoch wird hierbei das Design des Fahrzeugs gestört, da es bisher nicht möglich ist, das Sensorgehäuse fließend und unauffällig in das äußere Erscheinungsbild des Fahrzeugs zu integrieren.

US 2017/0274832 A1 offenbart eine Windschutzscheibe mit einem in einer Aussparung vorgesehen Radarfenster. Ein Sensorgehäuse ist mittels einer Innenmontage hinter der Windschutzscheibe befestigt. US 2011/0285576 A1 offenbart eine Windschutzscheibe mit einer von einer Abdeckung verschlossenen Aussparung. Ein Sensor ist in einem Windschutzscheibenelektronikmodul hinter der Windschutzscheibe aufgenommen. Diese Dokumente offenbaren kein Sensormodul, das eine vorgefertigte Baugruppe ist.

Demnach besteht die Aufgabe der vorliegenden Erfindung darin, die Nachteile des Stands der Technik zu vermeiden und die Verwendung von LiDaR Sensoren ohne wesentliche Nachteile im Hinblick auf deren Leistungsfähigkeit und Effizienz sowie das Design des Fahrzeugs zu ermöglichen. Diese und weitere Aufgaben werden nach dem Vorschlag der Erfindung durch eine Fahrzeugscheibe mit einem integrierten Sensormodul gemäß dem unabhängigen Patentanspruch gelöst. Vorteilhafte Ausgestaltungen der Erfindung ergeben sich aus den Unteransprüchen.

Erfindungsgemäß ist eine Fahrzeugscheibe mit einem integrierten Sensormodul entsprechend Anspruch 1 gezeigt. Die Fahrzeugscheibe umfasst unter anderem einen Scheibengrundkörper mit einer Aussparung. Die Aussparung im Scheibengrundkörper kann randständig oder nicht-randständig, d.h. in einem nicht am Rand des Scheibengrundkörpers befindlichen (Innen-)Bereich des Scheibengrundkörpers, ausgebildet sein. Die Fahrzeugscheibe umfasst weiterhin ein Sensormodul mit einem Modulgehäuse, das einen Hohlraum formt, in dem mindestens ein Sensor aufgenommen ist. Vorzugsweise ist das Modulgehäuse ein geschlossenes Modulgehäuse, welches den Hohlraum vollständig umgibt. Das den Hohlraum formende Modulgehäuse ist in die Aussparung des Scheibengrundkörpers eingesetzt und am Scheibengrundkörper befestigt. Hierbei bilden eine Außenfläche des Modulgehäuses und eine Außenfläche des Scheibengrundkörpers gemeinsam eine Außenfläche der Fahrzeugscheibe. Das Sensormodul ist eine vorgefertigte Baugruppe mit einem einen Hohlraum umgebenden Modulgehäuse, die in den Scheibengrundkörper integriert werden kann. Das Modulgehäuse wird somit weder vom Scheibengrundkörper noch von von der Fahrzeugscheibe verschiedenen Komponenten des Fahrzeugs gebildet. Das Modulgehäuse umgibt bzw. umgrenzt den Hohlraum unmittelbar. Da das Sensormodul eine vorgefertigte Baugruppe (d.h. Modul) ist, wird auch der mindestens eine Sensor durch Befestigung des Modulgehäuses am Scheibengrundkörper an der Fahrzeugscheibe befestigt. Das Modulgehäuse hat eine statisch-tragende Funktion und ermöglicht den Durchtritt von Sensorsignalen. Das Sensormodul kann als vorgefertigte Baugruppe selbständig in der Fahrzeugscheibe verbaut werden, wobei eine Befestigung des Sensormoduls beispielsweise ausschließlich am Scheibengrundkörper erfolgt. Möglich ist auch eine Befestigung alleinig am Scheibengrundkörper und zusätzlich an der tragenden Struktur des Fahrzeugs, insbesondere am Fahrzeugdach. Jedenfalls wird das Sensormodul, welches das den Hohlraum formende Modulgehäuse und mindestens einen Sensor im Modulhohlraum umfasst, nicht erst an der Fahrzeugscheibe gebildet, sondern ist bereits vor der Montage an der Fahrzeugscheibe bzw. vor der Montage am Scheibengrundkörper als selbständige Baugruppe vorhanden. Jedenfalls wird der mindestens eine Sensor nicht separat an der Fahrzeugscheibe oder anderen Bestandteilen des Fahrzeugs befestigt, sondern eine Befestigung des mindestens einen Sensors an der Fahrzeugscheibe erfolgt ausschließlich durch Befestigen des als vorgefertigte Baugruppe ausgebildeten Sensormoduls am Scheibengrundkörper (und gegebenenfalls zusätzlich an der tragenden Struktur des Fahrzeugs).

Die erfindungsgemäße Fahrzeugscheibe ermöglicht durch die Integration des Sensormoduls in die Fahrzeugscheibe in vorteilhafter Weise die Verwendung von LiDaR Sensoren mit hoher Effizienz, ohne die äußere Erscheinung des Fahrzeugs zu beeinträchtigen. Die erfindungsgemäße Fahrzeugscheibe kann eine beliebige feststehende Scheibe in einem Fahrzeug sein. Besonders vorteilhaft ist die Verwendung als Windschutzscheibe.

Um eine besonders hohe Effizienz des mindestens einen LiDaR Sensors zu erreichen, weist das Modulgehäuse eine Ausbuchtung (d.h. einen gekrümmten, nicht-ebenen Bereich) auf, die so geformt ist, dass sich im Sichtfeld (Strahlengang) des Sensors ein Gehäuseabschnitt des Modulgehäuses befindet, auf den das Sensorsignal (z.B. Laserpuls) mit einer Abweichung von maximal 10° zur Senkrechten trifft. Vorzugsweise trifft das Sensorsignal senkrecht auf den Gehäuseabschnitt des Modulgehäuses im Sichtfeld des Sensors. Hierdurch können die eingangs genannten nachteiligen Effekte (Ablenkung, Streuung und Absorption von Photonen) wesentlich vermindert werden. Das Modulgehäuse ist beispielsweise senkrecht zu einer Ebene des Scheibengrundkörpers ausgebuchtet, insbesondere senkrecht zu einer tangentialen Ebene auf den Scheibengrundkörper im Bereich der Aussparung, in welche das Sensormodul eingesetzt ist. Die Ausbuchtung ist im verbauten Zustand weg vom Fahrzeuginnenraum gerichtet. Bezogen auf eine Richtung von einem (im verbauten Zustand) unteren Rand des Scheibengrundkörpers zu einem oberen Rand des Scheibengrundkörpers weist das Modulgehäuse einen Gehäuseabschnitt auf, der sich von der (gegebenenfalls tangentialen) Ebene des Scheibengrundkörpers entfernt, sowie einen daran angrenzenden Gehäuseabschnitt, der sich der Ebene des Scheibengrundkörpers annähert. Die Ausbuchtung ist vorzugsweise so ausgebildet, dass im verbauten Zustand der Fahrzeugscheibe das Sichtfeld (Strahlengang) des Sensors parallel zur Längsrichtung des Fahrzeugs (d.h. parallel zur Fahrtrichtung und/oder Gegenfahrtrichtung des Fahrzeugs) gerichtet ist. Die Ausbuchtung wird von einem die Außenfläche der Fahrzeugscheibe bildenden Gehäuseabschnitt des Modulgehäuses gebildet. Im Bereich der Ausbuchtung ist das Modulgehäuse gekrümmt, d.h. falls sich das Modulgehäuse aus mehreren Bestandteilen zusammensetzt, formen alle Bestandteile des Modulgehäuses die Ausbuchtung und sind somit gekrümmt. Vorteilhaft ist der Sensor zumindest teilweise innerhalb der Ausbuchtung angeordnet, so dass die vom Sensor emittierten Sensorsignale unmittelbar auf den die Ausbuchtung bildenden Gehäuseabschnitt des Modulgehäuses treffen können bzw. reflektierte Signale vom Sensor empfangen werden können.

Das Modulgehäuse kann ein- oder mehrteilig ausgebildet sein. Vorteilhaft ist das Modulgehäuse mehrteilig ausgebildet und weist ein die Außenfläche des Modulgehäuses bildendes Deckteil und ein am Deckteil befestigtes Bodenteil auf, welche gemeinsam den Hohlraum für den Sensor unmittelbar umgrenzen. Vorzugsweise ist das Bodenteil nur am Deckteil befestigt. Vorzugsweise wird durch Boden- und Deckteil ein geschlossenes Modulgehäuse gebildet, welches den Hohlaum vollständig (unmittelbar) umgrenzt. Das Bodenteil dient vorzugsweise zur tragenden Befestigung des mindestens einen Sensors. In senkrechter Sicht durch eine Ebene des Scheibengrundkörpers, insbesondere eine tangentiale Ebene auf den Scheibengrundkörper im Bereich der Aussparung, befindet sich das Bodenteil vorzugsweise innerhalb der Abmessungen des Deckteils, d.h. das Deckteil steht relativ zum Bodenteil vor und weist somit einen Überstand auf, der vorteilhaft zur Befestigung des Modulgehäuses am Scheibengrundkörper verwendet werden kann. Eine Ausbuchtung des Modulgehäuses wird vom Deckteil gebildet. Vorteilhaft ist das Deckteil einteilig ausgebildet und besteht aus einem einzigen Material. Vorteilhaft setzt sich das Deckteil aus zwei Bestandteilen zusammen und besteht aus zwei verschiedenen Materialien. Vorteilhaft ist das Bodenteil einteilig ausgebildet und besteht aus einem einzigen Material.

Der Scheibengrundköper ist vorteilhaft ein gläserner Scheibengrundköper. Gemäß einer Ausgestaltung ist der Scheibengrundkörper in Form einer Verbundscheibe ausgebildet und umfasst mindestens eine Außenscheibe und eine Innenscheibe, die durch mindestens eine thermoplastische Zwischenschicht fest miteinander verbunden sind. Windschutzscheiben sind typischer Weise als Verbundscheiben ausgebildet. Alternativ kann der Scheibengrundkörper als Einzelscheibe (Einscheibensicherheitsglas) ausgebildet sein. Heck-, Dach- oder Seitenscheiben sind typischer Weise als Einscheibensicherheitsgläser (ESG) ausgebildet. Je nach Verwendung der Fahrzeugscheibe kann der Scheibengrundkörper in entsprechender Weise ausgebildet sein.

Die eine oder mehreren Scheiben des Scheibengrundkörpers enthalten oder bestehen aus Glas, besonders bevorzugt Flachglas, Floatglas, Quarzglas, Borosilikatglas, Kalk-Natron-Glas, oder klaren Kunststoffen, vorzugsweise starre klare Kunststoffe, insbesondere Polyethylen, Polypropylen, Polycarbonat, Polymethylmethacrylat, Polystyrol, Polyamid, Polyester, Polyvinylchlorid und/oder Gemische davon. Vorzugsweise ist der Scheibengrundkörper gläsern. Der Scheibengrundkörper ist bevorzugt transparent, insbesondere für die Verwendung der Fahrzeugscheibe als Windschutzscheibe oder Rückscheibe eines Fahrzeugs oder anderen Verwendungen bei denen eine hohe Lichttransmission erwünscht ist. Als transparent im Sinne der Erfindung wird eine Transmission im sichtbaren Spektralbereich von größer 70 % verstanden. Für Fahrzeugscheiben, die nicht im verkehrsrelevanten Sichtfeld des Fahrers liegen, beispielsweise für Dachscheiben, kann die Transmission aber auch viel geringer sein, beispielsweise größer als 5 %. Der Scheibengrundkörper kann farblos oder gefärbt sein. Vorzugsweise bestehen die Scheiben des Scheibengrundkörpers aus thermisch vorgespanntem Kalk-Natron-Glas.

Die Dicke des Scheibengrundkörpers kann breit variieren und den Erfordernissen des Einzelfalls angepasst werden. Vorzugsweise werden Scheibengrundköper mit den Standardstärken von 1,0 mm bis 25 mm verwendet. Die Größe des Scheibengrundkörpers kann breit variieren und richtet sich nach der Größe der Verwendung der Fahrzeugscheibe. Die Größe der Fahrzeugscheibe ergibt sich aus der Größe des Scheibengrundkörpers.

Der Scheibengrundkörper kann eine beliebige dreidimensionale Form aufweisen. Der Scheibengrundkörper kann planar oder leicht oder stark in einer oder in mehreren Richtungen des Raumes gebogen sein.

Bei einem Scheibengrundkörper, der in Form einer Verbundscheibe ausgebildet ist, sind die Einzelscheiben durch mindestens eine Zwischenschicht miteinander verbunden, die mindestens einen thermoplastischen Kunststoff, bevorzugt Polyvinylbutyral (PVB), Ethylenvinylacetat (EVA) und/oder Polyethylenterephthalat (PET) enthält oder hieraus besteht. Die thermoplastische Zwischenschicht kann aber auch beispielsweise Polyurethan (PU), Polypropylen (PP), Polyacrylat, Polyethylen (PE), Polycarbonat (PC), Polymethylmetacrylat, Polyvinylchlorid, Polyacetatharz, Gießharz, Acrylat, fluorinierte Ethylen-Propylen, Polyvinylfluorid und/oder Ethylen-Tetrafluorethylen, oder ein Copolymer oder Gemisch davon enthalten. Die thermoplastische Zwischenschicht kann durch eine oder mehrere übereinander angeordnete thermoplastische Folien ausgebildet werden.

Das Modulgehäuse enthält oder besteht aus einem oder mehreren Kunststoffen. Das Modulgehäuse enthält oder besteht vorzugsweise aus Polycarbonat (PC), Polymethylmethacrylat (PMMA), Styrol-Acrylnitril (SAN) und/oder Copolymeren, Blockcopolymeren oder Gemischen davon. Bei einem gläsernen Scheibengrundkörper weist die erfindungsgemäße Fahrzeugscheibe somit eine Materialkombination Glas/Kunststoff auf.

Bei einer vorteilhaften Ausgestaltung der Erfindung ist das Deckteil des Modulgehäuses zweiteilig ausgebildet und weist ein Außenteil sowie ein in Form einer Innenauskleidung des Außenteils ausgebildetes Innenteil auf, wobei Außenteil und Innenteil aus voneinander verschiedenen Materialien bestehen. Zudem weist das Innenteil eine im Sichtfeld des Sensors befindliche Ausnehmung (Durchbrechung) auf, die ein Fenster für die Sensorsignale des Sensors darstellt. Durch diese Maßnahme kann das Deckteil einerseits mechanisch sehr stabil und andererseits hochdurchlässig für die Sensorsignale ausgebildet werden, indem die Materialien von Außenteil und Innenteil so gewählt werden, dass das Außenteil eine hohe Durchlässigkeit für die Sensorsignale hat und das Material des Innenteils dem Deckteil eine hohe mechanische Stabilität vermittelt. Beispielsweise bestehen das Außenteil und das Innenteil jeweils aus einem einzigen Material.

Beispielsweise enthält oder besteht das Außenteil des Deckteils aus Polycarbonat (PC), Polyethylen (PE), Polymethylmethacrylat (PMMA), Polypropylen (PP), Polystyrol, Polybutadien, Polynitril, Polyester, Polyurethan, Polyacrylat, Polyamid, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol-Polycarbonat (ABS+PC), PET+PC, PBT+PC und/oder Copolymeren, Blockcopolymeren oder Gemischen davon. Das Innenteil des Deckteils enthält oder besteht beispielsweise aus Polycarbonat (PC), Polyethylen (PE), Polymethylmethacrylat (PMMA), Polypropylen (PP), Polystyrol, Polybutadien, Polynitril, Polyester, Polyurethan, Polyacrylat, Polyamid, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol-Polycarbonat (ABS+PC), PET+PC, PBT+PC und/oder Copolymeren, Blockcopolymeren oder Gemischen davon. Das Innenteil kann zudem anorganische oder organische Füllstoffe, bevorzugt SiO₂, Al₂O₃, TiO₂, Tonmineralien, Silikate, Zeolithe, Glasfasern, Kohlenstofffasern, Glaskugeln, organische Fasern und/oder Gemische davon enthalten. Die Füllstoffe können die Stabilität des Deckteils weiter erhöhen. Zudem können die Füllstoffe den Anteil an polymeren Materialien verringern und so die Herstellungskosten des Sensormoduls vermindern.

Die Materialstärke des Außenteils liegt beispielsweise im Bereich von 2 bis 4 mm, bevorzugt 2,5 bis 3,5 mm. Die Materialstärke des Innenteils liegt beispielsweise im Bereich von 1 bis 3 mm, bevorzugt 1,5 bis 2,5 mm.

Beispielsweise umfasst das Modulgehäuse ein Deckteil mit einem Außenteil aus Polycarbonat (PC) und einem Innenteil aus einem Polymerblend wie Acrylnitril-Butadien-Styrol-Polycarbonat (ABS+PC) oder PET+PC. Ein solches Deckteil ist einerseits mechanisch sehr stabil, andererseits hat es im Bereich des Sichtfelds des Sensors, wo das Material des Innenteils ausgespart ist und nur das Außenteil aus PC vorhanden ist (Fenster), eine sehr hohe Durchlässigkeit für IR-Laserpulse eines LiDaR-Sensors. Wie Versuche der Erfinder ergeben haben, hat PC eine Transmission für IR-Laserpulse von mindestens 80%. Das PC-Material des Deckteils ist vorzugsweise schwarz/opak gefärbt, so dass der LiDAR-Sensor optisch verdeckt bzw. für das menschliche Auge nicht sichtbar ist, jedoch im Wellenlängenberich der IR-Laserpulse arbeiten kann.

Das Deckteil kann auch einteilig ausgebildet und aus Materialien wie für das Außenteil bestehen oder diese enthalten. Um eine gute Durchlässigkeit für die Sensorsignale des Sensors zu erreichen, kann es von Vorteil sein, wenn das Deckteil im Sichtfeld des Sensors eine dünnere Wandstärke hat als außerhalb des Sichtfelds des Sensors.

Bei einer weiteren Ausgestaltung der erfindungsgemäßen Fahrzeugscheibe ist das Deckteil des Modulgehäuses verlängert und in Form einer sich im verbauten Zustand in das Fahrzeugdach hinein erstreckenden Dachblende ausgebildet. Die Dachblende kann beispielsweise streifenförmig in Fahrzeuglängsrichtung oder T-förmig geformt sein. Dies ermöglicht eine optisch sehr ansprechende Einbindung des in die Fahrzeugscheibe integrierten Sensormoduls in das Fahrzeug.

Bei einem in Form einer Verbundscheibe ausgebildeten Scheibengrundkörper ist es vorteilhaft, wenn angrenzend an die Aussparung die Außenscheibe relativ zur Innenscheibe rückversetzt ist, so dass von der Innenscheibe eine von oben her zugängliche Auflagefläche gebildet wird, an der das Modulgehäuse des Sensormoduls befestigt ist. Diese Maßnahme ermöglicht eine besonders feste Verbindung des Modulgehäuses mit dem Scheibengrundkörper und gleichzeitig eine ästhetisch/aerodynamisch gute Integration des Sensormoduls in den Scheibengrundkörper.

Bei einem in Form eines Einscheibensicherheitsglases ausgebildeten Scheibengrundkörper ist es vorteilhaft, wenn das Modulgehäuse angrenzend an die Aussparung an einer Innenfläche des Einscheibensicherheitsglases befestigt ist, was eine feste und optisch ansprechende Integration des Sensormoduls ermöglicht.

Vorzugsweise ist ein zwischen Modulgehäuse und Scheibengrundkörper gebildeter Zwischenraum wenigstens teilweise, insbesondere vollständig, mit thermoplastischem Material, beispielsweise einem thermoplastischen Elastomer, verfüllt, wodurch einerseits eine gute Abdichtung zur äußeren Umgebung hin erreicht wird und andererseits unerwünschte Luftgeräusche durch Fahrtwind erheblich verringert werden können.

Das Sensormodul enthält mindestens einen LiDaR Sensor zur Objekterkennung, der grundsätzlich beliebig ausgebildet sein kann. Vorzugweise handelt es sich um einen Sensor, bei dem der Abstand zu einem Objekt durch die Laufzeitmessung eines vom Sensor emittierten und vom Objekt reflektierten Sensorsignals bestimmt werden kann. Besonders bevorzugt handelt es sich um einen LiDaR-Sensor, durch den die äußere Umgebung des Fahrzeugs mittels Laserpulse im infraroten Wellenlängenbereich abgetastet werden kann. Der LiDaR-Sensor emittiert Laserpulse und detektiert die von einem Objekt reflektierten Laserpulse. Beispielsweise haben die Laserpulse eine Wellenlänge im Wellenlängenbereich von 850 bis 1100 nm. Typischer Weise weist Polycarbonat für diese Wellenlängen eine hohe Transmission von mehr als 80%, insbesondere um die 90%, auf.

Das Modulgehäuse des Sensormoduls, insbesondere Deck- und Bodenteil, sind vorzugsweise im Spritzgussverfahren hergestellt.

Das Modulgehäuse, insbesondere dessen die Außenfläche der Fahrzeugscheibe mitbildender Teil, insbesondere das Deckteil, kann mit einer Heizeinrichtung versehen sein, die beispielsweise elektrisch heizbare Heizdrähte oder eine elektrisch heizbare Heizschicht umfassen. Für die Herstellung des Deckteils kann hierzu eine Folie mit aufgebrachten Heizdrähten in ein Spritzgusswerkzeug eingelegt und hinterspritzt werden. Vorteilhaft stellt die Seite mit den Heizdrähten diejenige Seite dar, auf die das Material des Deckteils (z.B. PC) aufgespritzt wird. Die Heizdrähte sind so sicher eingebettet. Alternativ kann auch zunächst ein Spritzling für das Deckteil hergestellt werden und die Heizdrähte werden im Anschluss beispielsweise mittels Ultraschall-Einbettung auf die Innenseite des Spritzlings aufgebracht. Anstatt von Heizdrähten kann auch eine leitfähige transparente Schicht verwendet werden, die über ein Magnetron-Verfahren oder ähnliches abgeschieden wird. Die Heizdrähte können beispielsweise durch gegenüberliegende Stromsammelschienen (Busbars) elektrisch kontaktiert werden. Die Busbars können vor oder nach dem Hinterspritzen der Folie aufgebracht werden. Hierfür stehen verschiedene Technologien zur Verfügung, wie z.B. Anlöten, Aufkleben, Abscheidung mittels plasmaunterstütztem Fine Powder Coating, Einsteppen oder dergleichen.

Der der äußeren Umgebung zugewandte Bereich des Modulgehäuses bzw. Deckteils ist vorzugsweise mit einer kratz- und witterungsstabilen Beschichtung (Hardcoat) versehen, beispielsweise ein ein- oder zweischichtiges thermisch härtendes Polysiloxansystem oder ein UV-härtendes Acrylatsystem. Die Schichtdicken eines einschichtigen Polysiloxan-Lacks liegen vorzugsweise im Bereich von 5 µm bis 20 µm. Die Schichtdicken eines zweischichtigen Polysiloxan-Lacks betragen vorzugsweise: Primer: 0,5 µm bis 5,0 µm, Hardcoat: 3,5 µm bis 15,0 µm.

Die Erfindung erstreckt sich weiterhin auf ein Verfahren zur Herstellung einer erfindungsgemäßen Fahrzeugscheibe mit integriertem Sensormodul, welches die folgenden Schritte umfasst:
- Bereitstellen eines Scheibengrundkörpers mit einer Aussparung,
- Einsetzen des als vorgefertigte Baugruppe ausgebildeten Sensormoduls in die Aussparung und Befestigen des Sensormoduls am Scheibengrundkörper.

Das erfindungsgemäße Verfahren ermöglicht die Bereitstellung einer in einem Fahrzeug verbaubaren Fahrzeugscheibe, bei der das Sensormodul integriert ist und lediglich elektrisch angeschlossen werden muss.

Ferner erstreckt sich die Erfindung auf die Verwendung der erfindungsgemäßen Fahrzeugscheibe in Fortbewegungsmitteln für den Verkehr auf dem Lande, in der Luft oder zu Wasser, vorzugsweise als Fensterscheibe in Schienenfahrzeugen oder Kraftfahrzeugen, insbesondere als Windschutzscheibe, Heckscheibe, Seitenscheibe oder Dachscheibe von Personenkraftwagen.

Die verschiedenen Ausgestaltungen der Erfindung können einzeln oder in beliebigen Kombinationen realisiert sein. Insbesondere sind die vorstehend genannten und nachstehend zu erläuternden Merkmale nicht nur in den angegebenen Kombinationen, sondern auch in anderen Kombinationen oder in Alleinstellung einsetzbar, ohne den Rahmen der vorliegenden Erfindung zu verlassen.

Die Erfindung wird nachfolgend anhand von Ausführungsbeispielen näher erläutert, wobei Bezug auf die beigefügten Figuren genommen wird. Es zeigen in vereinfachter, nicht maßstabsgetreuer Darstellung:
- Fig. 1: eine schematische Darstellung eines Ausführungsbeispiels der erfindungsgemäßen Fahrzeugscheibe in Aufsicht,
- Fig. 2: eine Fahrzeugscheibenanordnung mit der an einem Fahrzeugdach befestigten Fahrzeugscheibe von Fig. 1 in einer Schnittansicht gemäß Schnittlinie A-A,
- Fig. 3: eine Variante der Fahrzeugscheibenanordnung von Fig. 2,
- Fig. 4: eine Variante der Fahrzeugscheibenanordnung von Fig. 3,
- Fig. 5: eine Variante der Fahrzeugscheibenanordnung von Fig. 4,
- Fig. 6: eine Variante der Fahrzeugscheibenanordnung von Fig. 5,
- Fig. 7: eine weitere Variante der Fahrzeugscheibenanordnung von Fig. 5,
- Fig. 8A, 8B: zwei Ausgestaltungen der Fahrzeugscheibe von Fig. 7 in Aufsicht,
- Fig. 9: eine weitere Variante der Fahrzeugscheibenanordnung von Fig. 2,
- Fig. 10: eine Variante der Fahrzeugscheibenanordnung von Fig. 9,
- Fig. 11: ein weiteres Ausführungsbeispiel der Fahrzeugscheibe in Aufsicht,
- Fig. 12: eine Fahrzeugscheibenanordnung mit der an einem Fahrzeugdach befestigten Fahrzeugscheibe von Fig. 11 in einer Schnittansicht gemäß Schnittlinie A-A.

### Ausführliche Beschreibung der Zeichnungen

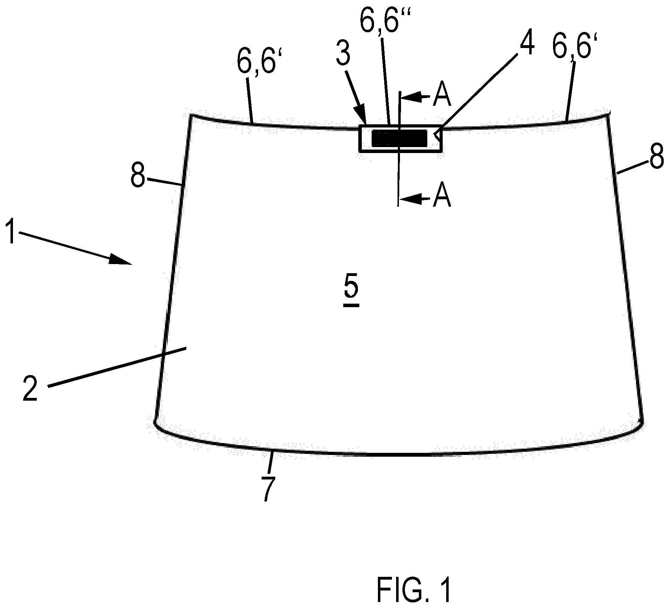

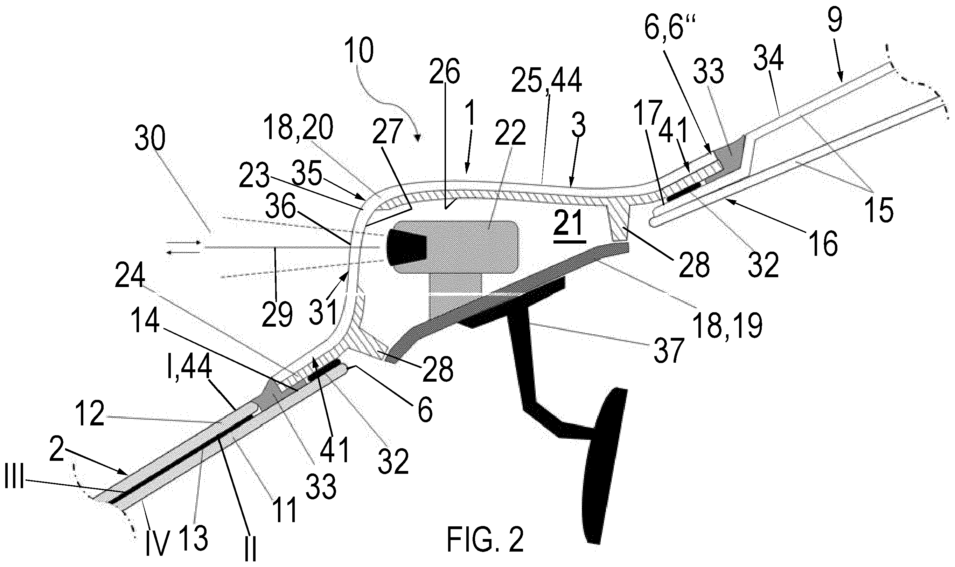

Es wird zunächst Bezug auf die Figuren 1 und 2 genommen, worin ein Ausführungsbeispiel für die erfindungsgemäße Fahrzeugscheibe mit integriertem Sensormodul veranschaulicht ist. Figur 1 zeigt die insgesamt mit der Bezugszahl 1 bezeichnete Fahrzeugscheibe 1 in Aufsicht. Figur 2 ist eine Schnittdarstellung der Fahrzeugscheibe 1 von Figur 1 gemäß Schnittlinie A-A, wobei der dachseitige Einbau der Fahrzeugscheibe 1 in einem Kraftfahrzeug veranschaulicht ist. Die Fahrzeugscheibe 1 und das Fahrzeugdach 9 bilden gemeinsam eine Fahrzeugscheibenanordnung 10.

Die Fahrzeugscheibe 1 ist hier beispielsweise in Form einer Windschutzscheibe für ein Kraftfahrzeug ausgebildet. Wie in Figur 1 gezeigt, umfasst die Fahrzeugscheibe 1 einen Scheibengrundkörper 2, in den ein Sensormodul 3 durch Festeinbau integriert ist. Das Sensormodul 3 ist in eine randständige Aussparung 4 der Fahrzeugscheibe 1 eingesetzt. Die Aussparung 4 befindet sich außerhalb eines zentralen Sichtfelds 5 in etwa mittig am dachseitigen Fahrzeugscheibenrand 6 der Fahrzeugscheibe 1, welcher sich im Einbauzustand der Fahrzeugscheibe 1 oben befindet. Im vorliegenden Ausführungsbeispiel ist die Aussparung 4 rechteckförmig ausgebildet, wobei in Abhängigkeit der äußeren Form des Sensormoduls 3 andere Formen für die Aussparung gleichermaßen möglich sind, beispielsweise eine halbkreisförmige Aussparung. Gegenüberliegend zum dachseitigen Fahrzeugscheibenrand 6 befindet sich der bodenseitige Fahrzeugscheibenrand 7. Zwischen dachseitigem Fahrzeugscheibenrand 6 und bodenseitigem Fahrzeugscheibenrand 7 befinden sich die beiden seitlichen Fahrzeugscheibenränder 8, welche im eingebauten Zustand typischer Weise an den A-Säulen eines Kraftfahrzeugs angeordnet sind. Der dachseitige Fahrzeugscheibenrand 6 der Fahrzeugscheibe 1 setzt sich durch einen dachseitigen Fahrzeugscheibenrand 6' des Scheibengrundkörpers 2 und einen dachseitigen Fahrzeugscheibenrand 6" des Sensormoduls 3 zusammen. Der Scheibengrundkörper 2 und das Sensormodul 3 bilden gemeinsam die Fahrzeugscheibe 1. Das Sensormodul 3 kann als vorgefertigte Baugruppe am Scheibengrundkörper 2 befestigt werden.

In Figur 2 ist die Fahrzeugscheibe 1 von Figur 1 anhand einer Schnittdarstellung dargestellt, wobei der dachseitige Einbau der Fahrzeugscheibe 1 veranschaulicht ist und ergänzend zu Figur 1 das Fahrzeugdach 9 eines nicht weiter dargestellten Kraftfahrzeugs gezeigt ist. Der Scheibengrundkörper 2 und das Fahrzeugdach 9 sind jeweils nur teilweise dargestellt, wie durch die gestrichelten Linien erkennbar ist.

Der Scheibengrundkörper 2 ist hier eine Verbundscheibe und umfasst eine Innenscheibe 11 sowie eine Außenscheibe 12, die durch eine thermoplastische Zwischenschicht 13 fest miteinander verbunden (laminiert) sind. Die Außenscheibe 12 und die Innenscheibe 11 bestehen jeweils aus Glas, vorzugsweise thermisch vorgespanntem Kalk-Natron-Glas und sind für sichtbares Licht transparent. Die thermoplastische Zwischenschicht 13 besteht aus einem thermoplastischen Kunststoff, vorzugsweise Polyvinylbutyral (PVB), Ethylenvinylacetat (EVA) und/oder Polyethylenterephthalat (PET).

Die Außenfläche I der Außenscheibe 12 ist der äußeren Umgebung zugewandt und ist gleichzeitig die Außenfläche des Scheibengrundkörpers 2. Die Innenfläche II der Außenscheibe 12 sowie die Außenfläche III der Innenscheibe 11 sind jeweils der Zwischenschicht 13 zugewandt. Die Innenfläche IV der Innenscheibe 11 ist dem Fahrzeuginnenraum zugewandt und ist gleichzeitig die Innenfläche des Scheibengrundkörpers 2.

Wie in Figur 2 erkennbar, ist im Bereich der Aussparung 4 die Außenscheibe 12 relativ zur Innenscheibe 13 rückversetzt, so dass die Außenfläche III der Innenscheibe 11 von oben her zugänglich ist. Im Bereich des Rückversatzes der Außenscheibe 12 dient die Außenfläche III der Innenscheibe 13 als Auflagefläche 14 für das Sensormodul 3.

Das in Figur 2 teilweise dargestellte Fahrzeugdach 9 umfasst zwei voneinander beabstandete Blechteile 15, die am scheibenseitigen Rand 16 beispielsweise durch Schweißen oder Nieten fest miteinander verbunden sind und gemeinsam einen Dachflansch 17 zur Auflage der Fahrzeugscheibe 1 formen. Das Sensormodul liegt mit einem an den dachseitigen Rand 6, 6" angrenzenden Bereich dem Dachflansch 17 auf und ist an diesem befestigt. Es versteht sich, dass der Scheibengrundkörper 2 mit einem an den dachseitigen Rand 6, 6' angrenzenden Bereich dem Dachflansch 17 gleichermaßen aufliegt und an diesem befestigt ist.

Das Sensormodul 3 umfasst ein Modulgehäuse 18, das sich aus einem Bodenteil 19 und einem mit dem Bodenteil 19 verbundenen Deckteil 20 zusammensetzt. Das Bodenteil 19 und das Deckteil 20 formen gemeinsam einen vorzugsweise geschlossenen Hohlraum 21 zur Aufnahme mindestens einen Sensors 22. Das Bodenteil 19 und Deckteil 20 umgeben den Hohlraum 21 vollständig, so dass keine weiteren Komponenten zur Formung des Hohlraums 21 erforderlich sind, insbesondere keine Komponenten des Kraftfahrzeugs wie beispielsweise ein Fahrzeughimmel bzw. innenseitige Dachauskleidung. Das Bodenteil 19 erstreckt sich weder bis zum Scheibengrundkörper 2 noch bis zum Fahrzeugdach 9 und ist in Sicht senkrecht durch die Fahrzeugscheibe 1 vollständig innerhalb der Abmessungen des Deckteils 20 angeordnet. Für die vorstehende Betrachtung wird beispielsweise die Sicht senkrecht durch eine Ebene des Scheibengrundkörpers 2 betrachtet (z.B. eine tangentiale Ebene an den Scheibengrundkörper 2 im Bereich der Aussparung 4). Das Deckteil 20 erstreckt sich demnach über das Bodenteil 19 hinaus (z.B. bezogen auf die vorstehend genannte tangentiale Ebene an Scheibengrundkörper im Bereich der Aussparung 4), so dass das Deckteil 20 relativ zum Bodenteil 19 vorsteht und einen Überstand 41 bildet, der zum Festeinbau des Sensormoduls 3 dienen kann. Das Bodenteil 19 ist nur mit dem Deckteil 20 fest (vorzugsweise lösbar) verbunden, wobei das Bodenteil 19 keine weitere feste Verbindung mit einer anderen Komponente der Fahrzeugscheibe 1 oder des Kraftfahrzeugs aufweist.

Das Deckteil 20 ist hier beispielsweise zweiteilig ausgebildet und besteht aus einem Außenteil 23 und einem Innenteil 24, die beispielsweise durch 2-Komponenten-Spritzguss/Direktanspritzung fest miteinander verbunden sind. Das Innenteil 24 ist in Form einer Innenauskleidung des Außenteils 23 ausgebildet, wobei eine Ausnehmung 27 vorgesehen ist, die als Fenster 31 für den Sensor 22 dient. Im vorliegenden Ausführungsbeispiel umfasst das Innenteil 24 eine vorspringende Stütze 28, an der das Bodenteil 19 befestigt ist.

Das Sensormodul 3 ist (ausschließlich) mittels des Modulgehäuses 18 (speziell mittels des Deckteils 20) sowohl am Scheibengrundkörper 2 als auch am Fahrzeugdach 9 durch eine Verklebung befestigt. Zu diesem Zweck ist eine Kleberaupe 32 im Bereich des Rückversatzes der Außenscheibe 12 auf die Auflagefläche 14 der Außenfläche III der Innenscheibe 11 sowie auf den Dachflansch 17 des Fahrzeugdachs 9 aufgebracht. Auf die umlaufend ausgebildete Kleberaupe 32 ist der Überstand 41 des Deckteils 20 aufgesetzt, wodurch das Modulgehäuse 18 einerseits mit dem Scheibengrundkörper 2 und andererseits mit dem Fahrzeugdach 9 fest verbunden ist. Der Scheibengrundkörper 2 ist gleichermaßen durch eine in Figur 2 nicht gezeigte Kleberaupe mit dem Dachflansch 17 verklebt, wobei die Klebmaterialien entsprechend der Materialien von Scheibengrundkörper 2 und Deckteil 20 (Glas/Kunststoff) verschieden gewählt sein können.

Ein Zwischenraum zwischen Deckteil 20 und Scheibengrundkörper 2 bzw. zwischen Deckteil 20 und Fahrzeugdach 9 ist mit einer Umspritzung 33 aus einem thermoplastischen Material (z.B. thermoplastisches Elastomer) verfüllt, wodurch eine gute Abdichtung zur äußeren Umgebung hin erreicht wird.

Die zur äußeren Umgebung gewandte Außenfläche des Deckteils 20, im Weiteren als "Deckteil-Außenfläche 25" bezeichnet, bildet gemeinsam mit der Außenfläche I der Außenscheibe 12 des Scheibengrundkörpers 2 die Außenfläche 44 der Fahrzeugscheibe 1. Die Außenfläche I der Außenscheibe 12 geht zumindest annähernd fluchtend in die Deckteil-Außenfläche 25 über. Gleichermaßen geht die Deckteil-Außenfläche 25 fluchtend in die Außenfläche des Fahrzeugdachs 9, im Weiteren als "Fahrzeugdach-Außenfläche 34" bezeichnet, über. Die Umspritzung 33 füllt den Zwischenraum zwischen Deckteil 20 und Außenscheibe 12 bzw. Deckteil 20 und Fahrzeugdach 9 fluchtend aus. Hierdurch können sehr gute strömungstechnische Eigenschaften (Aerodynamik), insbesondere zur Verminderung von Luftgeräuschen durch Fahrtwind, sowie eine ansprechende äußere Erscheinung erzielt werden.

Das Innenteil 24 und Außenteil 23 des Deckteils 20 können aus gleichen Materialien bestehen. Vorzugsweise bestehen das Innenteil 24 und Außenteil 23 aus voneinander verschiedenen Materialien, wobei es von Vorteil ist, wenn das Material des Außenteils 23 im Hinblick auf eine gute Durchlässigkeit für die Sensorsignale des Sensors 22, das Material des Innenteils 24 im Hinblick auf eine hohe Festigkeit des Modulgehäuses 18 gewählt werden. Beispielsweise besteht das Außenteil 23 aus Polycarbonat (PC), Polymethylmethacrylat (PMMA), Styrol-Acrylnitril (SAN) und/oder Copolymeren, Blockcopolymeren oder Gemischen davon. Das Innenteil 24 besteht beispielsweise aus Polycarbonat (PC), Polyethylen (PE), Polymethylmethacrylat (PMMA), Polypropylen (PP), Polystyrol, Polybutadien, Polynitril, Polyester, Polyurethan, Polyacrylat, Polyamid, Polyethylenterephthalat (PET), Polybutylenterephthalat (PBT), bevorzugt Acrylnitril-Butadien-Styrol (ABS), Acrylester-Styrol-Acrylnitril (ASA), Acrylnitril-Butadien-Styrol-Polycarbonat (ABS+PC), PET+PC, PBT+PC und/oder Copolymeren, Blockcopolymeren oder Gemischen davon. Das Innenteil 24 kann zudem anorganische oder organische Füllstoffe, bevorzugt SiO₂, Al₂O₃, TiO₂, Tonmineralien, Silikate, Zeolithe, Glasfasern, Kohlenstofffasern, Glaskugeln, organische Fasern und/oder Gemische davon enthalten. Die Füllstoffe können die Stabilität des Deckteils 20 weiter erhöhen. Zudem können die Füllstoffe den Anteil an polymeren Materialien verringern und so die Herstellungskosten des Sensormoduls 3 vermindern. Die Materialstärke des Außenteils 23 liegt beispielsweise im Bereich von 2 bis 4 mm, bevorzugt 2,5 bis 3,5 mm. Die Materialstärke des Innenteils 24 liegt beispielsweise im Bereich von 1 bis 3 mm, bevorzugt 1,5 bis 2,5 mm.

Das Bodenteil 19 dient hier beispielsweise als Träger für den Sensor 22, der mit dem Bodenteil 19 fest verbunden ist. In Figur 2 ist die Fahrzeugscheibe 1 in einer typischen Einbaulage gezeigt, bei welcher der Sensor 22 so ausgerichtet ist, dass das hier beispielsweise kegelförmige Sichtfeld 30 (Strahlengang) in Fahrtrichtung nach vorne gerichtet ist, wobei ein Zentralstrahl 29 des Sichtfelds 30 (Strahlengang) parallel zur Fahrzeuglängsrichtung bzw. Fahrzeuglängsebene ist.

Wie in Figur 2 gezeigt, weist das Deckteil 20 senkrecht zu einer Ebene des Scheibengrundkörpers 2 (z.B. tangentiale Ebene an Scheibengrundkörper 2 im Bereich der Aussparung 4) eine domartige Ausbuchtung 35 zur äußeren Umgebung hin auf, wobei das Deckteil 20 im Bereich des Fensters 31 einen zur Fahrzeuglängsrichtung senkrechten Deckteilabschnitt 36 aufweist. Der Zentralstrahl 29 des Sichtfelds 30 trifft senkrecht auf den Deckteilabschnitt 36.

Es handelt sich bei dem Sensor 22 um einen LiDaR-Sensor, der Laserstrahlpulse mit einer Wellenlänge im beispielsweise infraroten Wellenlängenbereich emittieren und reflektierte Laserstrahlpulse empfangen kann. Dies ist in Figur 2 durch die beiden gegengerichteten Pfeile im Bereich des Sichtfelds 30 veranschaulicht. Falls das Außenteil 23 aus Polycarbonat (PC) besteht, kann eine sehr gute Durchlässigkeit (mindestens 80%) für die IR-Laserstrahlpulse erreicht werden. Durch das senkrechte Auftreffen der emittierten und reflektierten Laserstrahlpulse auf den Deckteilabschnitt 36 kann eine unerwünschte Reflexion/Streuung sowie Absorption von Licht im Deckteil 20 erheblich vermindert werden, wodurch die Effizienz der Sensormessung deutlich verbessert ist. Vorzugsweise besteht das Außenteil 23 aus schwarzem bzw. im visuellen Bereich opaken PC, das Innenteil 24 aus PC+ABS oder PC+PET.

Bei der anhand der Figuren 1 und 2 veranschaulichten Fahrzeugscheibe 1 kann das Sensormodul 3 in vorteilhafter Weise als vorgefertigte Baugruppe in den Scheibengrundkörper 2 integriert werden, so dass die Fahrzeugscheibe 1 mit integriertem Sensormodul 3 zum Einbau in ein Kraftfahrzeug bereitgestellt werden kann, ohne dass fahrzeugseitig, mit Ausnahme des elektrischen Anschlusses, eine weitere Montage für das Sensormodul 3 erforderlich ist.

In dem Ausführungsbeispiel von Figur 2 ist fahrzeuginnenraumseitig am Bodenteil 19 ein Rückspiegel 37 angebracht.

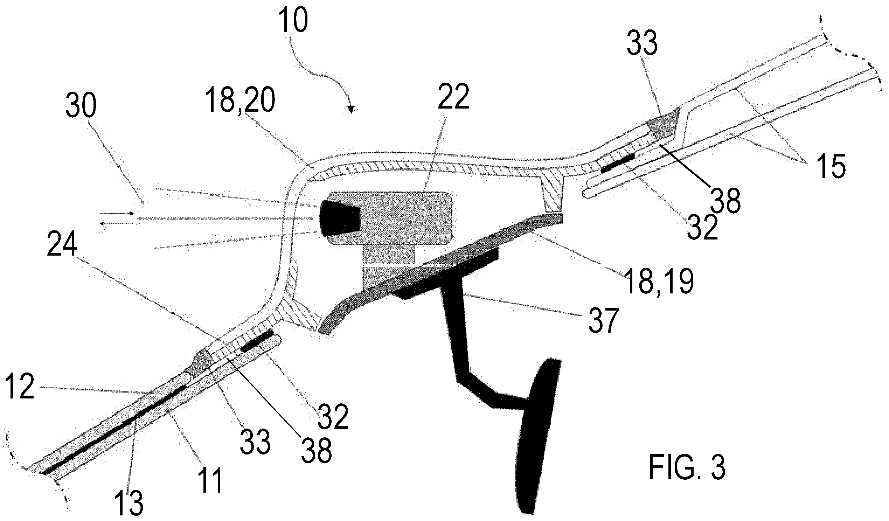

Im Folgenden werden anhand der Figuren 3 bis 12 verschiedene weitere Ausgestaltungen der Fahrzeugscheibe 1 bzw. Fahrzeugscheibenanordnung 10 beschrieben. Um unnötige Wiederholungen zu vermeiden, werden jeweils nur die Unterschiede zu jener Ausgestaltung beschrieben, auf welche Bezug genommen wird und ansonsten wird auf die dortigen Ausführungen verwiesen.

Figur 3 zeigt anhand einer analogen Schnittdarstellung eine Variante der Fahrzeugscheibenanordnung 10 von Figur 2. Bei der Ausgestaltung von Figur 3 befindet sich die Umspritzung 33 nicht im Bereich zwischen Deckteil 20 und Auflagefläche 14, so dass dort ein Zwischenraum 38 verbleibt. Durch diese Maßnahme kann Material eingespart werden.

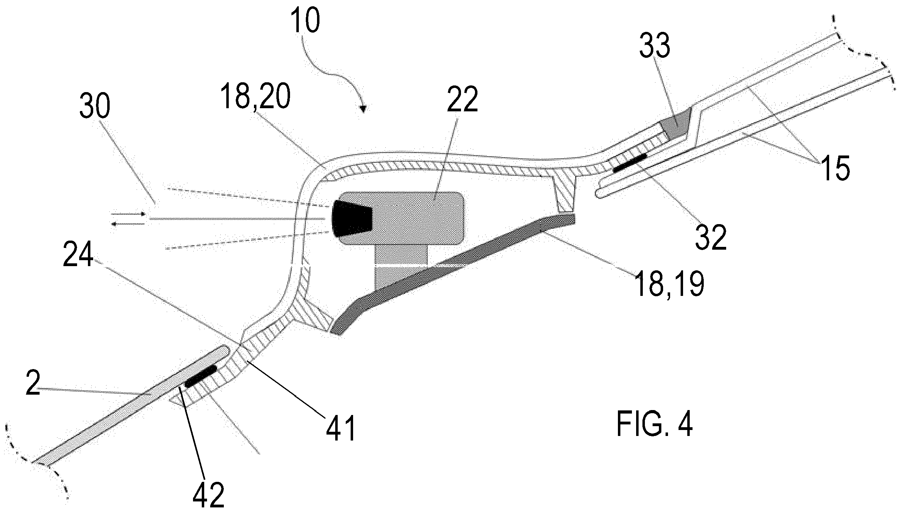

Figur 4 zeigt anhand einer analogen Schnittdarstellung eine Variante der Fahrzeugscheibenanordnung 10 von Figur 3. Bei der Ausgestaltung von Figur 4 ist der Scheibengrundkörper 2 keine Verbundscheibe, sondern ein Einscheibensicherheitsglas, wie es beispielsweise als Heckscheibe in Kraftfahrzeugen verbaut wird. Im Bereich der Aussparung 4 ist das Modulgehäuse 18 an der Innenfläche 42 des Scheibengrundkörpers 2 befestigt. Scheibengrundkörperseitig erstreckt sich das Innenteil 24 des Deckteils 20 im Bereich des Überstands 41 über das Außenteil 23 hinaus (z.B. bezogen auf eine tangentiale Ebene an Scheibengrundkörper im Bereich der Aussparung 4). Das Innenteil 24 überlappt den Scheibengrundkörper 2 innenseitig und ist durch eine Kleberaupe 32 mit diesem verklebt. Scheibengrundkörperseitig fehlt die Umspritzung 33. Es ist kein Rückspiegel 37 am Bodenteil 19 angebracht.

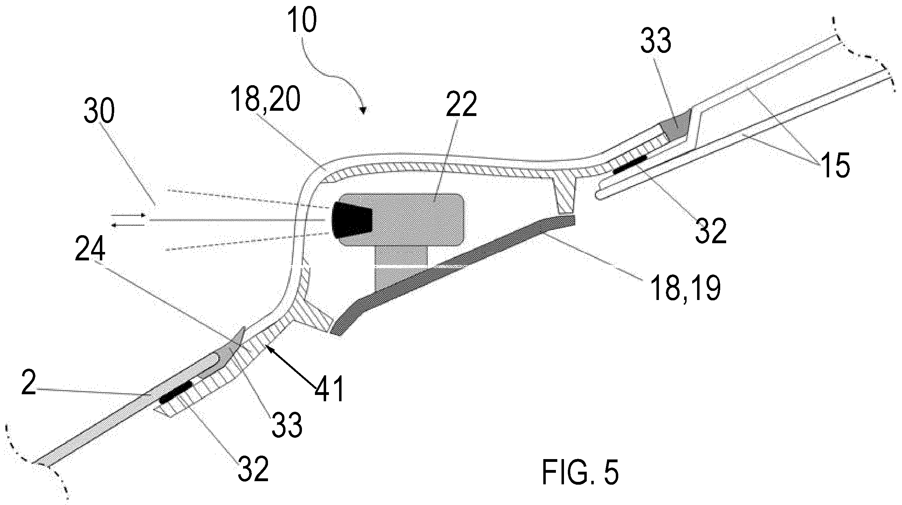

Figur 5 zeigt anhand einer analogen Schnittdarstellung eine Variante der Fahrzeugscheibenanordnung 10 von Figur 4. Bei der Ausgestaltung von Figur 5 ist scheibengrundkörperseitig eine Umspritzung 33 im Zwischenraum zwischen Scheibengrundkörper 2 und Deckteil 20 vorgesehen.

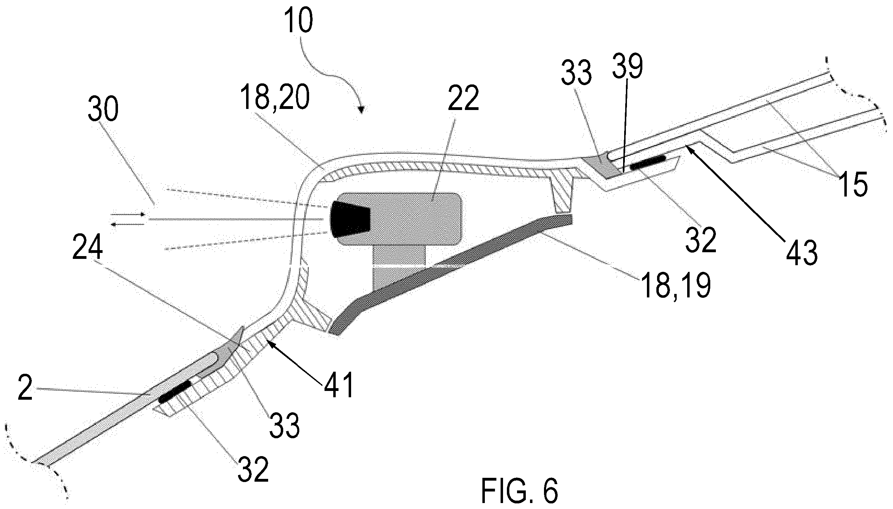

Figur 6 zeigt anhand einer analogen Schnittdarstellung eine Variante der Fahrzeugscheibenanordnung 10 von Figur 5. Bei der Ausgestaltung von Figur 6 weist das Fahrzeugdach 9 keinen Dachflansch 17 auf, sondern das Modulgehäuse 18 bzw. Deckteil 20 (sowie der Scheibengrundkörper 2) sind auf der Unterseite 43 des Fahrzeugsdachs 9 mittels einer Kleberaupe 32 angeklebt. Das Deckteil 20 bzw. das Außenteil 23 des Deckteils 20 weist zu diesem Zweck einen Deckteilflansch 39 auf, der in Überlapp mit dem Fahrzeugdach 9 gebracht wird. Durch eine Umspritzung 33 wird der Zwischenraum zwischen Deckteil 20 und Fahrzeugdach 9 verfüllt, wodurch eine gute Abdichtung zur äußeren Umgebung hin sowie ein fluchtender Übergang zwischen Deckteil 20 und Fahrzeugdach 9 geschaffen wird.

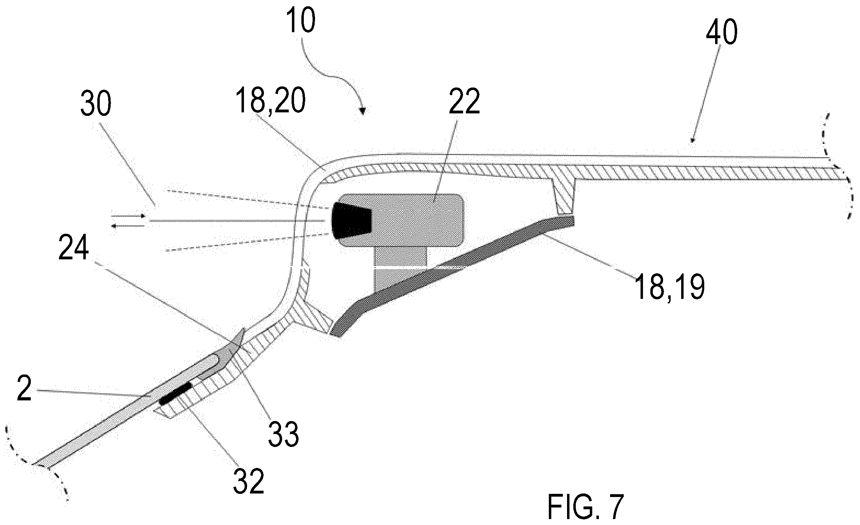

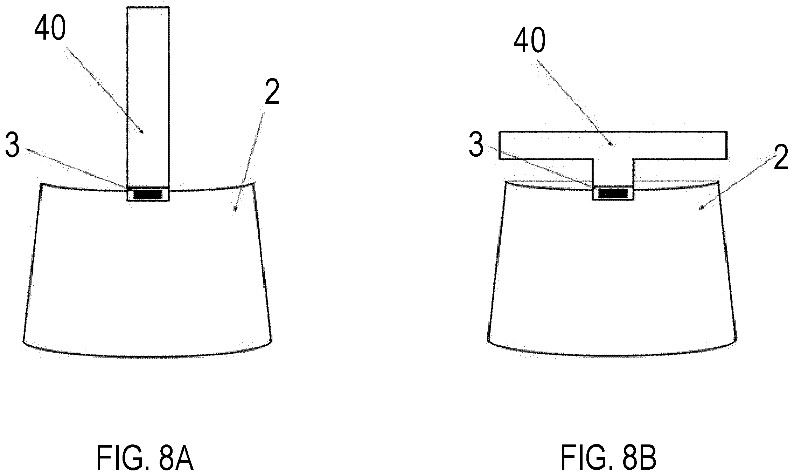

Figur 7 zeigt anhand einer analogen Schnittdarstellung eine Variante der Fahrzeugscheibenanordnung 10 von Figur 5. Bei der Ausgestaltung von Figur 7 ist das Deckteil 20 verlängert und formt eine Dachblende 40, die in das Fahrzeugdach 9 in Fahrzeuglängsrichtung hineinreicht und am Fahrzeugdach 9 befestigt ist, was in Figur 7 nicht dargestellt ist. Wie in den Figuren 8A und 8B gezeigt, die jeweils eine Ausgestaltung der Fahrzeugscheibenanordnung 10 von Figur 7 in Aufsicht veranschaulichen, kann die Dachblende 40 beispielsweise streifenörmig (Figur 8A) oder T-förmig (Figur 8B) ausgebildet sein.

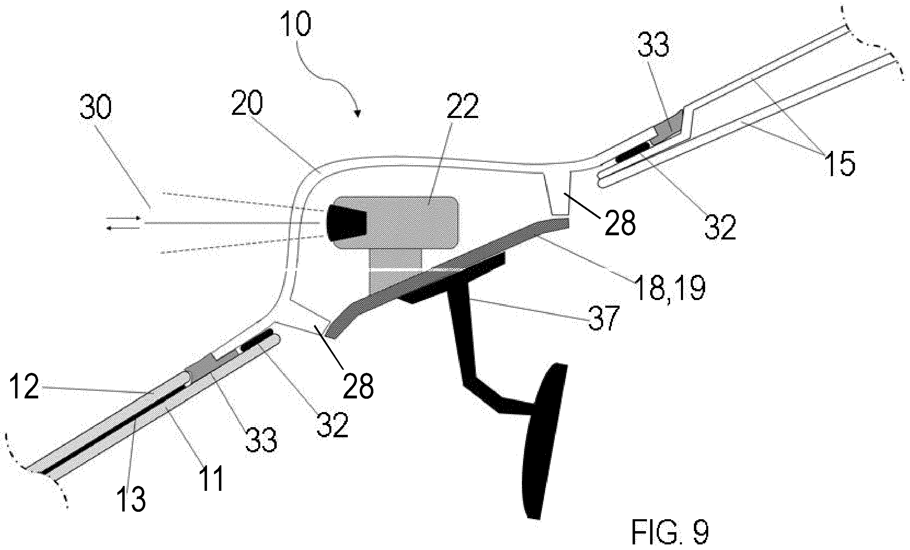

Figur 9 zeigt anhand einer analogen Schnittdarstellung eine weitere Variante der Fahrzeugscheibenanordnung 10 von Figur 2. Bei der Ausgestaltung von Figur 9 ist das Deckteil 20 einteilig. Für eine Befestigung des Bodenteils 19 am Außenteil 23 weist das Außenteil 23 eine umlaufende Stütze 28 auf.

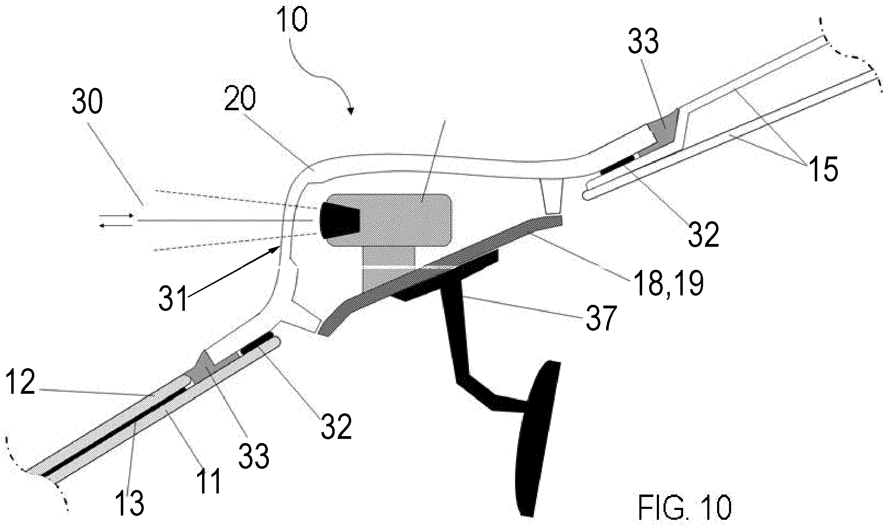

Figur 10 zeigt anhand einer analogen Schnittdarstellung eine weitere Variante der Fahrzeugscheibenanordnung 10 von Figur 9. Bei der Ausgestaltung von Figur 10 weist das Deckteil 20 im Bereich des Sichtfelds 30 des Sensors 22 eine dünnere Materialstärke auf als im übrigen Deckteil 20, wodurch ein Fenster 31 mit einer verbesserten Durchlässigkeit für die Signale des Sensors 22 gebildet wird.

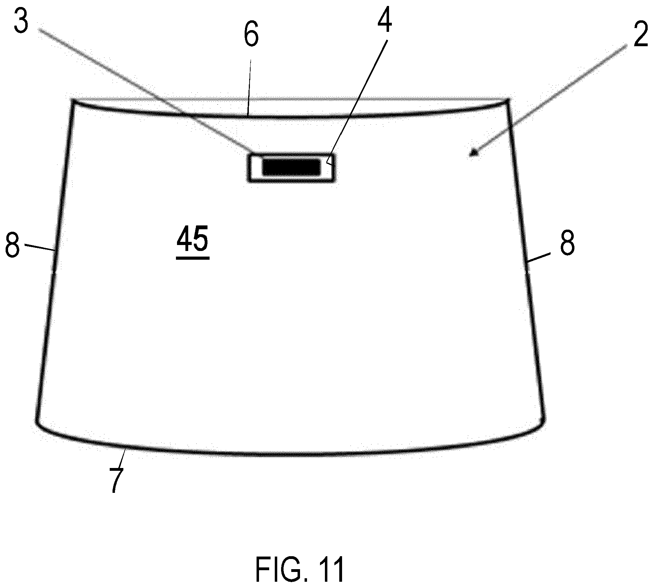

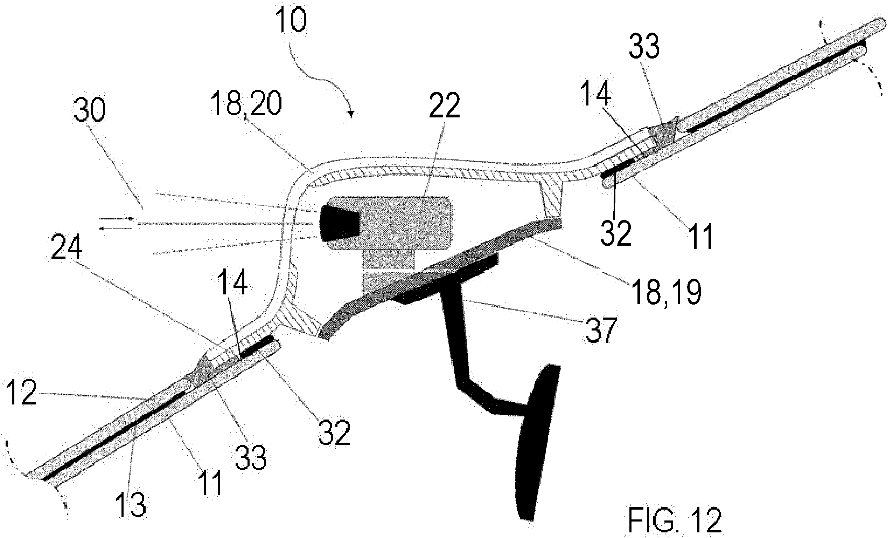

Die Figuren 11 und 12 zeigen in Aufsicht (Figur 11) bzw. Schnittdarstellung (Figur 12) eine weitere Variante der Fahrzeugscheibe 1 bzw. Fahrzeugscheibenanordnung 10, wie sie anhand der Figuren 1 und 2 veranschaulicht sind. Wie der Aufsicht von Figur 11 entnommen werden kann, ist das Sensormodul 3 nicht in eine randständige Aussparung 4 des Scheibengrundkörpers 2 eingesetzt, sondern in eine nicht-randständige, in einem Innenbereich 45 des Scheibengrundkörpers 2 ausgebildete Aussparung 4 des Scheibengrundkörpers 2, die beispielsweise mittels Ausfräsung oder Auslaserung erzeugt ist. Die Aussparung 4 wird ausschließlich vom Scheibengrundkörper 2 umgrenzt, d.h. ein die Aussparung 4 umgebender Rand wird vom Scheibengrundkörper 2 gebildet. Die Aussparung 4 grenzt nicht an einen Rand 6, 7, 8 der Fahrzeugscheibe 1.

Wie in der Schnittansicht von Figur 12 gezeigt, weist der Scheibengrundkörper 2 umlaufend einen Rückversatz der Außenscheibe 12 auf, so dass eine die Aussparung 4 umgebende Auflagefläche 14 für das Modulgehäuse 18 gebildet wird. Auf die Auflagefläche 14 ist umlaufend eine Kleberaupe 32 aufgebracht, durch welche das Deckteil 20 bzw. dessen Innenteil 24 mit der Innenscheibe 11 verklebt ist. Diese Ausgestaltung der Fahrzeugscheibe 1 kann vorteilhaft im Hinblick auf die Spannungserzeugung im Scheibengrundkörper 2 sein. Zudem kann ein selber Klebstoff bzw. Primer bei der Verklebung der Fahrzeugscheibe 1 im Kraftfahrzeug verwendet werden. Es ist nicht erforderlich, dass speziell auf Kunststoff ausgelegte Materialien hierfür eingesetzt werden.

Aus obigen Ausführungen ergibt sich, dass die Erfindung eine verbesserte Fahrzeugscheibe mit integriertem Sensormodul zur Verfügung stellt. Das Sensormodul kann als vorgefertigte Baugruppe in eine Aussparung des Scheibengrundkörpers eingebaut werden, so dass die Fahrzeugscheibe mit integriertem Sensormodul im Kraftfahrzeug verbaut werden kann. Das Sensormodul, insbesondere das Material und die Form des Modulgehäuses im Bereich des Strahlengangs des Sensors kann gezielt im Hinblick auf die Effizienz des Sensors ausgebildet werden, wobei ein senkrechtes Auftreffen von emittierten und reflektierten Sensorsignalen und eine hohe Transmission der Sensorsignale ermöglicht ist. Die Erfindung wird bei der Verwendung von LiDaR-Sensoren eingesetzt.

### Bezugszeichenliste

- 1: Fahrzeugscheibe
- 2: Scheibengrundkörper
- 3: Sensormodul
- 4: Aussparung
- 5: Sichtfeld
- 6,6',6": dachseitiger Fahrzeugscheibenrand
- 7: bodenseitiger Fahrzeugscheibenrand
- 8: seitlicher Fahrzeugscheibenrand
- 9: Fahrzeugdach
- 10: Fahrzeugscheibenanordnung
- 11: Innenscheibe
- 12: Außenscheibe
- 13: Zwischenschicht
- 14: Auflagefläche
- 15: Blechteil
- 16: scheibenseitiger Rand
- 17: Dachflansch
- 18: Modulgehäuse
- 19: Bodenteil
- 20: Deckteil
- 21: Hohlraum
- 22: Sensor
- 23: Außenteil
- 24: Innnenteil
- 25: Deckteil-Außenfläche
- 26: Deckteil-Innenfläche
- 27: Ausnehmung
- 28: Stütze
- 29: Zentralstrahl
- 30: Sichtfeld
- 31: Fenster
- 32: Kleberaupe
- 33: Umspritzung
- 34: Fahrzeugdach-Außenfläche
- 35: Ausbuchtung
- 36: Deckteilabschnitt
- 37: Rückspiegel
- 38: Zwischenraum
- 39: Deckteilflansch
- 40: Dachblende
- 41: Überstand
- 42: Innenfläche
- 43: Unterseite
- 44: Fahrzeugscheibe-Außenfläche
- 45: Innenbereich

## Patentansprüche

1. Fahrzeugscheibe (1) mit integriertem Sensormodul (3), welche umfasst:
- einen Scheibengrundkörper (2) mit einer Aussparung (4),
- ein als vorgefertigte Baugruppe ausgebildetes Sensormodul (3) mit einem Modulgehäuse (18), das einen Hohlraum (21) formt, in dem mindestens ein Sensor (22) aufgenommen ist,
wobei das den Hohlraum (21) formende Modulgehäuse (18) in die Aussparung (4) eingesetzt und am Scheibengrundkörper (2) befestigt ist, wobei eine Außenfläche (25) des Modulgehäuses (18) und eine Außenfläche (I) des Scheibengrundkörpers (2) gemeinsam eine Außenfläche (44) der Fahrzeugscheibe (1) bilden,
wobei der Sensor (22) ein LiDaR-Sensor ist und das Modulgehäuse (18) eine Ausbuchtung (35) aufweist, die so geformt ist, dass sich im Sichtfeld (30) des Sensors (22) ein Gehäuseabschnitt (33) befindet, auf den ein vom Sensor emittiertes Signal mit einer Abweichung von maximal 10° zur Senkrechten trifft.

2. Fahrzeugscheibe (1) nach Anspruch 1, bei welcher die Aussparung (4) randständig des Scheibengrundkörpers (2) ausgebildet ist.

3. Fahrzeugscheibe (1) nach Anspruch 1, bei welcher die Aussparung (4) in einem Innenbereich (45) des Scheibengrundkörpers (2) ausgebildet ist.

4. Fahrzeugscheibe (1) nach einem der Ansprüche 1 bis 3, bei welcher das Modulgehäuse (18) ein Deckteil (20) und ein am Deckteil (20) befestigtes Bodenteil (19) aufweist, welche gemeinsam den Hohlraum (21) für den Sensor (22) formen.

5. Fahrzeugscheibe (1) nach Anspruch 4, bei welcher das Deckteil (20) ein Außenteil (23) und ein in Form einer Innenauskleidung des Außenteils (23) ausgebildetes Innenteil (24) umfasst, wobei Außenteil (23) und Innenteil (24) aus verschiedenen Materialien bestehen, und wobei das Innenteil (24) eine im Sichtfeld (30) des Sensors (22) befindliche Ausnehmung (27) aufweist.

6. Fahrzeugscheibe (1) nach Anspruch 4, bei welcher das Deckteil (20) einteilig ausgebildet ist und im Sichtfeld (30) des Sensors (22) eine dünnere Wandstärke als außerhalb des Sichtfeld (30) des Sensors (22) hat.

7. Fahrzeugscheibe (1) nach einem der Ansprüche 4 bis 6, ohne Rückbezug auf Anspruch 3, bei welcher das Deckteil (20) in Form einer Dachblende (40) ausgebildet ist.

8. Fahrzeugscheibe (1) nach einem der Ansprüche 1 bis 7, bei welcher der Scheibengrundkörper (2) mindestens eine Außenscheibe (12) und eine Innenscheibe (11), die durch mindestens eine thermoplastische Zwischenschicht (13) miteinander verbunden sind, umfasst, wobei angrenzend an die Aussparung (4) die Außenscheibe (12) relativ zur Innenscheibe (11) rückversetzt ist, wodurch von der Innenscheibe (11) eine Auflagefläche (14) gebildet wird, wobei das Modulgehäuse (18) an der Auflagefläche (14) am Scheibengrundkörper (2) befestigt ist.

9. Fahrzeugscheibe (1) nach einem der Ansprüche 1 bis 7, bei welcher der Scheibengrundkörper (2) aus einer Einzelscheibe besteht, wobei das Modulgehäuse (18) angrenzend an die Aussparung (4) an einer Innenfläche (42) der Einzelscheibe befestigt ist.

10. Fahrzeugscheibe (1) nach einem der Ansprüche 1 bis 9, bei welcher ein zwischen Modulgehäuse (18) und Scheibengrundkörper (2) gebildeter Zwischenraum (38) wenigstens teilweise mit thermoplastischem Material (33) verfüllt ist.

11. Verfahren zur Herstellung einer Fahrzeugscheibe (1) nach einem der Ansprüche 1 bis 10, mit den folgenden Schritten:
- Bereitstellen eines Scheibengrundkörpers (2) mit einer Aussparung (4),
- Einsetzen des Sensormoduls (3) in die Aussparung (4) und Befestigen des Sensormoduls (3) am Scheibengrundkörper (2).

12. Verwendung der Fahrzeugscheibe (1) nach einem der Ansprüche 1 bis 10 als Fahrzeugscheibe in Fortbewegungsmitteln für den Verkehr auf dem Lande, in der Luft oder zu Wasser, vorzugsweise als Fensterscheibe in Schienenfahrzeugen oder Kraftfahrzeugen, insbesondere als Windschutzscheibe, Heckscheibe, Seitenscheibe oder Dachscheibe von Personenkraftwagen.

## Claims

1. Vehicle window (1) with an integrated sensor module (3), comprising:
- a pane main body (2) with a cutout (4),
- a sensor module (3) designed as a prefabricated assembly with a module housing (18), which forms a hollow space (21), in which at least one sensor (22) is accommodated,
wherein the module housing (18) forming the hollow space (21) is inserted into the cutout (4) and is fastened on the pane main body (2), wherein an outer surface (25) of the module housing (18) and an outer surface (I) of the pane main body (2) together form an outer surface (44) of the vehicle window (1),
wherein the sensor (22) is a LiDaR sensor and the module housing (18) has a bulge (35) shaped such that a housing section (33) is situated in a field of view (30) of the sensor (22), on which section a signal emitted by the sensor strikes with a deviation of a maximum of 10° from the perpendicular.

2. Vehicle window (1) according to claim 1, in which the cutout (4) is formed at an edge of the pane main body (2).

3. Vehicle window (1) according to claim 1, in which the cutout (4) is formed in an inner region (45) of the pane main body (2).

4. Vehicle window (1) according to one of claims 1 to 3, in which the module housing (18) has a cover (20) and a base (19) fastened to the cover (20), which, together, form the hollow space (21) for the sensor (22).

5. Vehicle window (1) according to claim 4, in which the cover (20) comprises an outer part (23) and an inner part (24) designed in the form of an inner lining of the outer part (23), wherein the outer part (23) and the inner part (24) are made of different materials, and wherein the inner part (24) has an opening (27) situated in the field of view (30) of the sensor (22).

6. Vehicle window (1) according to claim 4, in which the cover (20) is formed in one piece and has, in the field of view (30) of the sensor (22), a thinner wall thickness than outside the field of view (30) of the sensor (22).

7. Vehicle window (1) according to one of claims 4 to 6, without back-reference to claim 3, in which the cover (20) is designed in the form of a roof rim (40).

8. Vehicle window (1) according to one of claims 1 to 7, in which the pane main body (2) comprises at least one outer pane (12) and one inner pane (11) that are joined to one another via at least one thermoplastic intermediate layer (13), wherein adjacent the cutout (4), the outer pane (12) is set back relative to the inner pane (11), as a result of which a support surface (14) is formed by the inner pane (11), wherein the module housing (18) is fastened to the pane main body (2) at the support surface (14).

9. Vehicle window (1) according to one of claims 1 to 7, in which the pane main body (2) consists of a single pane, wherein the module housing (18) is fastened to an inner surface (42) of the single pane adjacent the cutout (4).

10. Vehicle window (1) according to one of claims 1 to 9, in which an intermediate space (38) formed between the module housing (18) and the pane main body (2) is at least partially filled with thermoplastic material (33).

11. Method for producing a vehicle window (1) according to one of claims 1 to 10, with the following steps:
- providing a pane main body (2) having a cutout (4),
- inserting the sensor module (3) into the cutout (4) and fastening the sensor module (3) on the pane main body (2).

12. Use of the vehicle window (1) according to one of claims 1 to 10 as a vehicle window in means of transportation for travel on land, in the air, or on water, preferably as a window pane in rail vehicles or motor vehicles, in particular as a windshield, rear window, side window, or roof panel of passenger cars.

## Revendications

1. Vitre de véhicule (1) comportant un module de capteur (3) intégré, laquelle comprend :
- un corps de base de vitre (2) comportant un évidement (4),
- un module de capteur (3) réalisé sous forme d'ensemble préfabriqué et comportant un boîtier de module (18) qui forme un espace creux (21) dans lequel est reçu au moins un capteur (22),
dans laquelle le boîtier de module (18) formant l'espace creux (21) est inséré dans l'évidement (4) et fixé au corps de base de vitre (2), dans laquelle une surface extérieure (25) du boîtier de module (18) et une surface extérieure (I) du corps de base de vitre (2) forment ensemble une surface extérieure (44) de la vitre de véhicule (1),
dans laquelle le capteur (22) est un capteur LiDAR et le boîtier de module (18) présente un renflement (35) qui est formé de sorte qu'une section de boîtier (33) se trouve dans le champ de vision (30) du capteur (22), sur laquelle un signal émis par le capteur arrive avec un écart de 10° maximum par rapport à la perpendiculaire.

2. Vitre de véhicule (1) selon la revendication 1, dans laquelle l'évidement (4) est réalisé côté bord du corps de base de vitre (2).

3. Vitre de véhicule (1) selon la revendication 1, dans laquelle l'évidement (4) est réalisé dans une zone intérieure (45) du corps de base de vitre (2).

4. Vitre de véhicule (1) selon l'une des revendications 1 à 3, dans laquelle le boîtier de module (18) présente une partie de recouvrement (20) et une partie de fond (19) fixée à la partie de recouvrement (20), lesquelles forment ensemble l'espace creux (21) pour le capteur (22).

5. Vitre de véhicule (1) selon la revendication 4, dans laquelle la partie de recouvrement (20) comprend une partie extérieure (23) et une partie intérieure (24) réalisée sous la forme d'un revêtement intérieur de la partie extérieure (23), dans laquelle la partie extérieure (23) et la partie intérieure (24) sont constituées de matériaux différents, et dans laquelle la partie intérieure (24) présente une cavité (27) se trouvant dans le champ de vision (30) du capteur (22).

6. Vitre de véhicule (1) selon la revendication 4, dans laquelle la partie de recouvrement (20) est réalisée d'une seule pièce et possède une épaisseur de paroi plus mince dans le champ de vision (30) du capteur (22) qu'en dehors du champ de vision (30) du capteur (22).

7. Vitre de véhicule (1) selon l'une des revendications 4 à 6, sans référence à la revendication 3, dans laquelle la partie de recouvrement (20) est réalisée sous la forme d'un panneau de toit (40).

8. Vitre de véhicule (1) selon l'une des revendications 1 à 7, dans laquelle le corps de base de vitre (2) comprend au moins une vitre extérieure (12) et une vitre intérieure (11) reliées entre elles au moyen d'au moins une couche intermédiaire (13) thermoplastique, dans laquelle la vitre extérieure (12) est en retrait par rapport à la vitre intérieure (11) de manière adjacente à l'évidement (4), moyennant quoi une surface d'appui (14) est formée par la vitre intérieure (11), dans laquelle le boîtier de module (18) est fixé au corps de base de vitre (2) au niveau de la surface d'appui (14).

9. Vitre de véhicule (1) selon l'une des revendications 1 à 7, dans laquelle le corps de base de vitre (2) est constitué d'une vitre unique, dans laquelle le boîtier de module (18) est fixé à une surface intérieure (42) de la vitre unique, de manière adjacente à l'évidement (4).

10. Vitre de véhicule (1) selon l'une des revendications 1 à 9, dans laquelle un espace intermédiaire (38) formé entre le boîtier de module (18) et le corps de base de vitre (2) est au moins partiellement rempli d'un matériau thermoplastique (33).

11. Procédé permettant de fabriquer une vitre de véhicule (1) selon l'une des revendications 1 à 10, comportant les étapes suivantes :
- fourniture d'un corps de base de vitre (2) comportant un évidement (4),
- insertion du module de capteur (3) dans l'évidement (4) et fixation du module de capteur (3) au corps de base de vitre (2).

12. Utilisation de la vitre de véhicule (1) selon l'une des revendications 1 à 10 comme vitre de véhicule dans des moyens de déplacement pour la circulation terrestre, aérienne ou maritime, de préférence comme vitre de fenêtre dans des véhicules ferroviaires ou des véhicules automobiles, en particulier comme pare-brise, lunette arrière, vitre latérale ou vitre de toit de voitures particulières.
